# EUROPÄISCHE PATENTSCHRIFT

(11) **EP 3 007 928 B1**
(45) Veröffentlichungstag und Bekanntmachung des Hinweises auf die Patenterteilung: **12.07.2017**
(21) Anmeldenummer: 14729650.3
(22) Anmeldetag: 10.06.2014
(51) Int. Cl.: B60N 2/07, B60N 2/42, B60N 2/427, B60N 2/16, B60N 2/46

(54) **FAHRZEUGSITZUNTERKONSTRUKTION MIT EINER UNFALLINDUZIERTEN VERSTELLVORRICHTUNG**
VEHICLE SEAT SUBSTRUCTURE WITH AN ACCIDENT-INDUCED ADJUSTMENT DEVICE
SUBSTRUCTURE DE SIÈGE DE VÉHICULE MUNIE D'UN DISPOSITIF DE RÉGLAGE INDUIT PAR UN ACCIDENT

(30) Priorität: 14.06.2013 DE 102013106250
(43) Veröffentlichungstag der Anmeldung: 20.04.2016
(73) Patentinhaber: Adient Luxembourg Holding S.à r.l., 2453 Luxembourg (LU)
(72) Erfinder: JANICEK, Jaroslav, 01401 Bytca (SK); HUDÁK, Martin, 91332 Dolna Suca (SK); CHIRAYATH, Pinto Thomas, 42799 Leichlingen (DE)
(74) Vertreter: Liedhegener, Ralf
(86) Internationale Anmeldenummer: PCT/EP2014/061979
(87) Internationale Veröffentlichungsnummer: WO 2014/198694

(56) Entgegenhaltungen:
- EP-A1- 1 188 603
- EP-A2- 0 242 859
- DE-A1- 3 536 545
- DE-A1- 19 859 238

## Beschreibung

Die Erfindung betrifft eine Fahrzeugsitzunterkonstruktion mit einer unfallinduzierten Verstellvorrichtung, umfassend
- ein Sitzschienenpaar, aufweisend eine verschiebbar gegenüber einer Sitzunterschiene angeordneten Sitzoberschiene, und
- eine über ein Beschlagelement verschwenkbar an der Sitzoberschiene angeordnete Sitzstruktur.

Fahrzeugsitzunterkonstruktionen der eingangs genannten Art sind in vielfältiger Ausgestaltung aus dem Stand der Technik bekannt und werden zur verstellbaren, insbesondere höhenverstellbaren, verschwenkbaren und/oder verschiebbaren Anordnung eines Fahrzeugssitzes an einer Fahrzeugstruktur verwendet.

Eine weitere Aufgabe einer solchen Fahrzeugsitzunterkonstruktion kann es sein, die bei einem Verkehrsunfall auf den Fahrzeugsitz wirkenden Kräfte zumindest teilweise zu kompensieren bzw. den Fahrzeugsitz in eine Position zu bringen, in der das Verletzungsrisiko eines auf dem Fahrzeugsitz befindlichen Passagiers bestmöglich verringert wird, wozu im Allgemeinen zugleich eine Festlegung der Position des Fahrzeugssitzes gegenüber der Fahrzeugstruktur gewünscht wird.

Bekannte Vorrichtung des Standes der Technik nutzen dazu insbesondere Mechanismen, die einen am Fahrzeugsitz angeordneten Haken aufweisen, der mit einem an einer Sitzunterschiene eines Sitzschienenpaares bzw. der Fahrzeugstruktur angeordneten Bolzen zusammenwirken soll. Diese Vorrichtungen haben allerdings den Nachteil, dass der Fahrzeugsitz bis zum Eingriff des Hakens mit dem Bolzen, insbesondere in Abhängigkeit der jeweiligen Verstellung des Fahrzeugssitzes auf einem darunter angeordneten Sitzschienenpaar, zunächst erheblich beschleunigt wird und nachfolgend durch den Kontakt zwischen Haken und Bolzen schlagartig gestoppt wird, wodurch erneut eine Verletzungsgefahr für einen Passagier entsteht. Darüber hinaus ist ein solches Fangsystem nur bedingt zuverlässig, insbesondere wenn bei dem Verkehrsunfall Kräfte in unterschiedliche Raumrichtungen auftreten.

Zusätzlich zu einem solchen Fangsystem, das den Fahrzeugsitz gegenüber der Fahrzeugstruktur festgelegt, wird gewöhnlich ein zusätzlicher Mechanismus benötigt, der ein Rückwärtsverschwenken des Fahrzeugssitzes durch unfallbedingt auftretenden Kräfte verhindert. Hierzu ist insbesondere aus dem Stand der Technik bekannt, seitlich am Fahrzeugsitz Auflageflächen anzuordnen, die bei einer unfallbedingten Rückverschwenkung des Fahrzeugssitzes mit einer Oberfläche des seitlich neben dem Fahrzeugsitz angeordneten Sitzschienenpaares in Kontakt gerät und dabei einen weiteres Verschwenken über die Oberfläche des Sitzschienenpaares hinaus verhindert. Eine solche Vorrichtung hat allerdings zum Nachteil, dass hierbei zwingend das Sitzschienenpaar seitlich des Fahrzeugssitzes angeordnet werden muss, bzw. sämtliche Bauteile des Fahrzeugssitzes und der Fahrzeugsitzunterkonstruktion aufeinander abgestimmt gefertigt werden müssen, wodurch eine Serienfertigung einer einheitlichen Fahrzeugsitzunterkonstruktion für verschiedene Fahrzeugsitze nicht mehr möglich ist. Die DE19859238 zeigt eine Fahrzeugsitzunterkonstruktion mit den Merkmalen des Oberbegriffs des Anspruchs 1. Der Erfindung liegt daher die Aufgabe zugrunde, eine Fahrzeugsitzunterkonstruktion bereitzustellen, die eine Feststellung eines Fahrzeugssitzes entlang eines Sitzschienenpaares bei einem Unfall zuverlässig ermöglicht und zugleich in einfacher Weise eine Absenkung des Fahrzeugssitzes durch unfallbedingte Kräfte verhindert, wobei die Konstruktion einfach zu montieren und kostengünstig herzustellen ist, zugleich eine geringe Fehleranfälligkeit aufweist und dabei auch vollständig unterhalb eines beliebigen Fahrzeugssitzes verbaut werden kann.

Die Erfindung löst die Aufgabe durch eine Vorrichtung nach Anspruch 1. Vorteilhafte Weiterbildungen der Erfindung sind in den abhängigen Ansprüchen angegeben.

Die erfindungsgemäße Fahrzeugsitzunterkonstruktion mit einer unfallinduzierten Verstellvorrichtung umfasst ein Sitzschienenpaar, das eine gegenüber einer Sitzunterschiene verschiebbar angeordnete Sitzoberschiene umfasst, sowie eine über ein Beschlagelement verschwenkbar an der Sitzoberschiene angeordnete Sitzstruktur, wobei das Beschlagelement derart ausgebildet und an der Sitzoberschiene sowie an der Sitzstruktur angeordnet ist, dass bei einem Unfall ein an dem Beschlagelement angeordnetes Feststellelement in eine die Sitzoberschiene an der Sitzunterschiene arretierende Verriegelungsposition gelangt.

Durch die Anordnung eines Feststellelements an dem gegenüber der Sitzoberschiene sowie der Sitzstruktur verschwenkbaren Beschlagelement wird in besonders einfacher Weise eine Festlegung der Sitzoberschiene gegenüber der Sitzunterschiene erreicht und zugleich eine weitere Absenkung der mit dem Beschlagelement verbundenen Sitzstruktur über den Kontakt des Feststellelements mit dem Sitzschienenpaar hinaus wirkungsvoll verhindert, wobei keine technisch komplexe Veränderung der Konstruktion des Beschlagelements bzw. des Sitzschienenpaares notwendig ist, wodurch die erfindungsgemäße Fahrzeugsitzunterkonstruktion besonders kostengünstig hergestellt und besonders einfach montiert werden kann. Zudem führt die geringe Anzahl der Bauelemente der erfindungsgemäßen Fahrzeugsitzunterkonstruktion in vorteilhafter Weise zu einer geringen Fehleranfälligkeit. Zuletzt ermöglicht die Anordnung des Feststellelements am mit der Sitzstruktur und der Sitzoberschiene verbundenen Beschlagelement, dass das Sitzschienenpaar nicht wie bei bekannten Vorrichtungen des Standes der Technik lediglich seitlich der Sitzstruktur angeordnet werden kann, sondern auch darunter, wobei nach wie vor die Wirkung des Feststellelements uneingeschränkt gewährleistet ist.

Grundsätzlich kann die Fahrzeugsitzunterkonstruktion aus beliebig vielen Bauteilen gebildet sein und beliebige Funktionen haben. Dabei wird unter einer Fahrzeugsitzunterkonstruktion zunächst jede Konstruktion verstanden, die originär dazu gebildet ist, unter einem Fahrzeugsitz angeordnet zu werden. Bevorzugt ist die Sitzunterkonstruktion dabei als mehrteilige Baugruppe aus Metall, etwa Stahl oder Aluminium, Kunststoff, einem Verbundwerkstoff und/oder einem faserverstärkten Werkstoffen gebildet.

Insbesondere weist die erfindungsgemäße Fahrzeugsitzunterkonstruktion eine unfallinduzierte Verstellvorrichtung auf, wobei die Verstellvorrichtung grundsätzlich zur translatorischen und/oder rotatorischen Verstellung eines auf der Sitzunterkonstruktion angeordneten Fahrzeugssitzes um eine oder mehrere Achsen bzw. Raumrichtungen vorgesehen sein kann.

Die Verstellvorrichtung ermöglicht wenigstens ein Verschwenken des Fahrzeugssitzes gegenüber einer Fahrzeugstruktur, wobei die Verstellvorrichtung sowohl derart konstruiert sein kann, dass eine Verschwenkung nur durch die bei einem Verkehrsunfall auftretenden Kräfte erfolgt, als auch derart, dass ein Verschwenken zusätzlich auch durch den Eingriff eines Benutzers erfolgen kann.

Dabei weist die erfindungsgemäße Fahrzeugsitzunterkonstruktion wenigstens ein Sitzschienenpaar auf, das aus einer Sitzoberschiene und einer Sitzunterschiene gebildet ist, wobei beide Sitzschienen in Bezug zueinander wenigstens entlang einer Raumrichtung verschoben werden können. Bevorzugt erfolgt die Verschiebung der Sitzschienen zueinander auf einer geraden Bahn; es ist allerdings auch ein gekrümmter Verlauf des Sitzschienenpaares denkbar. Die Sitzunterschiene ist vorzugsweise fest mit der Fahrzeugstruktur verbunden, während die Sitzoberschiene direkt oder über weitere Bauteile an der Sitzstruktur angeordnet ist. Bevorzugt ist auf jeder Seite des Fahrzeugssitzes ein Sitzschienenpaar angeordnet.

Dabei kann das Sitzschienenpaar grundsätzlich aus einem beliebigen Material, etwa einem Metall, einem Kunststoff oder einem Verbundwerkstoff, gebildet sein, beliebig viele Bauteile aufweisen und über eine Verschiebung der Sitzoberschiene in Bezug zur Sitzunterschiene hinausgehende Funktionen erfüllen. Bevorzugt sind Sitzoberschiene und/oder Sitzunterschiene allerdings einstückig gebildet.

Unter der Sitzstruktur werden in diesem Zusammenhang wenigstens die Bauteile des Fahrzeugssitzes verstanden, die für den Fahrzeugsitz strukturgebend sind, insbesondere ein Sitz- und/oder Rückenlehnenrahmen sowie dazugehörige Stütz-/oder Polsterelemente. Darüber hinaus kann die Sitzstruktur auch beispielsweise aus einer einstückigen oder mehrstückigen Schale gebildet sein und/oder Armlehnen, eine Kopfstütze, Sicherheitseinrichtungen wie Airbags oder Gurtelemente sowie weitere Anbauteile umfassen.

Ähnlich werden unter der Fahrzeugstruktur die Bauteile eines Fahrzeugs verstanden, die wenigstens den Grundaufbau des Fahrzeugs ausmachen, insbesondere die Karosserie und/oder der Fahrzeugrahmen.

Die erfindungsgemäße Fahrzeugsitzunterkonstruktion weist weiterhin wenigstens ein Beschlagelement auf, das verschwenkbar an der Sitzoberschiene und/oder an der Sitzstruktur angeordnet ist. Dabei kann es sich bei dem Beschlagelement grundsätzlich um ein einstückiges Bauteil oder um eine Baugruppe aus beliebig vielen Bauelementen handeln. Das Beschlagelement ist dabei aus im Fahrzeugbau bekannten Materialien, insbesondere Metall, Kunststoff oder einem Verbundwerkstoff gebildet und kann über die verschwenkbare Anordnung der Sitzstruktur an der Sitzoberschiene hinausgehende, weitere Funktionen erfüllen. Bei einer parallelen Anordnung von zwei Sitzschienenpaaren als Teil der Fahrzeugsitzunterkonstruktion ist bevorzugt an jeder der beiden Sitzoberschienen wenigstens ein verschwenkbares Beschlagelement angeordnet.

Schließlich umfasst die erfindungsgemäße Fahrzeugsitzunterkonstruktion ein Feststellelement, das an dem Beschlagelement angeordnet bzw. einstückig mit diesem gebildet ist. Dabei kann das Feststellelement zunächst aus einem beliebigen Material gebildet sein, bevorzugt ist es aus einem harten, deformationsfesten Material, etwa einem Metall, insbesondere Stahl, oder einem Verbundmaterial, etwa faserverstärktem Kunststoff, gebildet. Bevorzugt ist das Feststellelement als Steg oder als von dem Beschlagelement vorstehende Kante gebildet.

Nach einer vorteilhaften Weiterbildung der Erfindung ist das Feststellelement derart ausgebildet, dass es in der Verriegelungsposition die Sitzoberschiene kraftschlüssig an der Sitzunterschiene festlegt, wodurch in besonders einfacher Weise eine weitere Bewegung der Sitzoberschiene in Bezug zur Sitzunterschiene verhindert wird.

Nach einer weiteren vorteilhaften Weiterbildung der Erfindung ist das Feststellelement in der Verriegelungsposition klemmend zwischen der Sitzoberschiene und der Sitzunterschiene angeordnet, wobei das Feststellelement bei dem Übergang in die Verriegelungspositionen bevorzugt zwischen zwei aneinander geführten Flächen der Sitzunterschiene und der Sitzoberschiene eindringt, wodurch eine zuverlässige, kraftschlüssige Festlegung erreicht wird.

Gemäß einer bevorzugten Ausgestaltung der erfindungsgemäßen Fahrzeugsitzunterkonstruktion deformiert das Feststellelement in der Verriegelungsposition wenigstens einen Teil der Sitzunterschiene, bevorzugt zugleich auch einen Teil der Sitzoberschiene. Insbesondere erfolgt die Festlegung durch eine irreversible Deformation der Sitzunterschiene und/oder der Sitzoberschiene, wodurch zum einen eine besonders stabile, zumindest teilweise auch formschlüssige Festlegung in einfacher Weise erreicht wird und zum andern durch die Deformation der Bauteile die bei einem Verkehrsunfall auf den Fahrzeugsitz wirkenden Kräfte bereits teilweise abgebaut werden und somit die Verletzungsgefahr eines Passagiers auf dem Fahrzeugsitz verringert wird.

Nach einer vorteilhaften Weiterbildung der Erfindung ist das Beschlagelement zweiteilig gebildet, wobei das Beschlagelement bevorzugt wenigstens ein Beschlagteil sowie ein Zahnradsegment umfasst. Eine zweiteilige Ausgestaltung des Beschlagelements ermöglicht es, den Teil des Beschlagelements, der besonders hohe Lasten aufnehmen muss bzw. aufgrund besonders hoher auf das Bauteil wirkender Kräfte einem erhöhten Verschleiß unterworfen ist, aus einem besonders leistungsfähigen Werkstoff zu bilden, während der restliche Teil des Beschlagelements aus einem gewöhnlichen und somit kostengünstigen Werkstoff geformt werden kann.

Unter einem Zahnradsegment wird dabei grundsätzlich zunächst jedes Bauteil verstanden, das eine Mehrzahl von aneinander angeordneten Zähnen aufweist, wobei die Zähne sowohl entlang eines Kreisbogenabschnitts, als auch in beliebiger anderer Weise angeordnet sein können. Bevorzugt weist das Zahnradsegment mehrere entlang eines Kreisbogens, bevorzugt in einem Bogenabschnitt zwischen 10° und 45° angeordnete Zähne auf und ist aus einem besonders abriebfesten Material, insbesondere einem hochfeste Metall, gebildet.

Neben einer sicheren und kontrollierten Führung mittels der Verzahnung des Zahnradsegments an einem weiteren verzahnten Bauteil kann das Zahnradsegment auch weitere Funktionen erfüllen. Hierzu zählt beispielsweise die Verstärkung eines Bereichs des Beschlagelements, an dem dieses an der Sitzoberschiene und/oder an der Sitzstruktur angeordnet ist, wobei eine solche Verstärkung insbesondere über einen Teil des Umfangs oder des vollen Umfangs einer Öffnung des Beschlagelements zur Aufnahme einer Achse, eines Bolzens, einer Welle oder eines anderen Befestigungsmittel zur verschwenkbaren Anordnung erfolgen kann.

Nach einer bevorzugten Ausgestaltung der Erfindung ist das Feststellelement einstückig mit dem Beschlagelement, bevorzugt einstückig mit dem Beschlagteil des Beschlagelements gebildet, wodurch eine besonders einfache und kostengünstige Herstellung möglich ist und zugleich der einfache Aufbau eine hohe Funktionssicherheit gewährleistet.

Nach einer vorteilhaften Weiterbildung der Erfindung ist das Zahnradsegment fest am Beschlagteil angeordnet und wirkt mit einem weiteren Bauteil des Fahrzeugssitzes derart zusammen, dass eine Höhen- oder Neigungseinstellung des Fahrzeugssitzes gegenüber der Sitzunterschiene mittels des Beschlagelements möglich ist.

Dabei kann das Zahnradsegment in beliebiger Weise mit dem Beschlagteil des Beschlagelements verbunden werden, wobei bevorzugt das Zahnradsegment zumindest abschnittsweise flächig an einem Teil des Beschlagteils anliegt. Denkbar ist zur Verbindung beider Teile eine kraft- und/oder stoff- und/oder formschlüssige Verbindung, etwa durch Kleben, Schweißen oder Heißlöten, mittels eines Befestigungsmittels wie einer Niete, einem Stift, einer Schraube, einem Bolzen oder in sonstiger Weise.

Gemäß einer besonders bevorzugten Ausführung der erfindungsgemäßen Fahrzeugsitzunterkonstruktion ist das Beschlagelement, insbesondere der Beschlagteil des Beschlagelements, als wenigstens zweifach abgewinkeltes Bauelement gebildet, wobei einer der abgewinkelten Teile des Beschlagelements das Feststellelement bildet, wodurch das Feststellelement besonders stabil und untrennbar mit dem Beschlagelement verbunden ist und somit eine hohe Funktionssicherheit gewährleistet. Dabei kann sowohl ein Abschnitt des Beschlagelements als auch das Beschlagelement über die gesamte Breite abgewinkelt sein, wobei sowohl eine zweifache, rechtwinklige Abwinklung in entgegengesetzte Richtungen als auch eine Abwinklung mit beliebigen Winkeln zweifach in die gleiche Richtung denkbar ist. Das Feststellelement ist dabei bevorzugt als gerades, nicht verwinkeltes Bauteil gebildet, das besonders bevorzugt beidseitig eine ebene Außenfläche aufweist.

Ganz besonders bevorzugt ist das Beschlagelement derart zweifach abgewinkelt, dass in der Verriegelungsposition eine erste abgewinkelte Fläche des Beschlagelements als Feststellelement zwischen Sitzoberschiene und Sitzunterschiene eindringt, während eine zweite abgewinkelte Fläche zumindest teilweise, bevorzugt vollflächig, mit einer Oberfläche einer der beiden Sitzschienen, bevorzugt der Sitzoberschiene, in Kontakt kommt.

Nach einer vorteilhaften Weiterbildung der Erfindung ist das Beschlagelement sowohl gegenüber der Sitzoberschiene als auch gegenüber der Sitzstruktur jeweils verschwenkbar angeordnet, wobei das Beschlagelement bevorzugt über eine Achse, die insbesondere in Sitzquerrichtung verläuft, mit der Sitzstruktur verbunden ist, wodurch es in besonders einfacher Weise ermöglicht wird, das Sitzschienenpaar vollständig unterhalb der Sitzstruktur anzuordnen.

So weist ein Fahrzeugsitz, insbesondere ein Kraftfahrzeugsitz, mit einer erfindungsgemäße Fahrzeugsitzunterkonstruktion bevorzugt wenigstens ein Sitzschienenpaar auf, das vollständig unterhalb einer Sitzfläche des Fahrzeugssitzes derart angeordnet ist, dass sich die Sitzstruktur, insbesondere ein Sitzrahmen der Sitzfläche, bezogen auf die Einbaulage des Fahrzeugssitzes in einem Kraftfahrzeug auch mit dem Feststellelement in der Verriegelungsposition vollständig oberhalb des Sitzschienenpaares befindet, wodurch die Fahrzeugsitzstruktur eine beliebige Form aufweisen kann, ohne dass die Funktionalitäten der Fahrzeugsitzunterkonstruktion und insbesondere der unfallinduzierten Verstellvorrichtung beeinträchtigt werden würde.

Mehrere Ausführungsbeispiele der Erfindung werden nachfolgend mit Bezug auf die Zeichnungen näher erläutert. In den Zeichnungen zeigen:
- Fig.1: eine perspektivische Darstellung eines Ausschnitts einer ersten Ausführungsform einer Fahrzeugsitzunterkonstruktion,
- Fig.2: eine gedrehte perspektivische Darstellung der in Fig. 1 dargestellten Ausführungsform der Fahrzeugsitzunterkonstruktion,
- Fig.3: eine perspektivische Darstellung einer Gesamtansicht der in Fig. 1 dargestellten Ausführungsform der Fahrzeugsitzunterkonstruktion,
- Fig.4: eine perspektivische Darstellung eines Beschlagelements der in Fig. 1 dargestellten Ausführungsform der Fahrzeugsitzunterkonstruktion mit daran angeformten Feststellelement aus zwei Blickrichtungen,
- Fig.5: eine Reihe perspektivischer Darstellungen eines Ausschnitts der in Fig.1 dargestellten Ausführungsform der Fahrzeugsitzunterkonstruktion im zeitlichen Verlauf bei dem Übergang des Beschlagelements in eine Verriegelungsposition,
- Fig. 6: eine perspektivische Darstellung eines Beschlagelements einer zweiten Ausführungsform der Fahrzeugsitzunterkonstruktion aus zwei Blickrichtungen und
- Fig.7: eine schematische Ansicht eines Ausschnitts eines Fahrzeugssitzes mit einem vollständig unterhalb einer Sitzfläche eines Fahrzeugssitzes angeordnetem Sitzschienenpaar der Fahrzeugsitzunterkonstruktion.

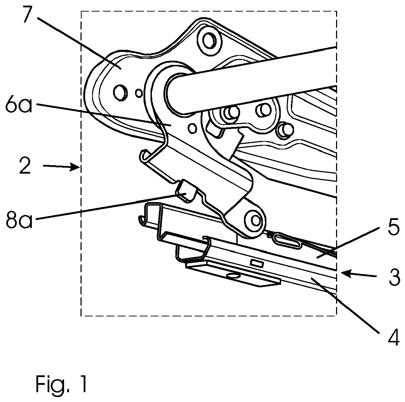

Eine erste, in Fig. 1 ausschnittsweise dargestellte Ausführungsform einer Fahrzeugsitzunterkonstruktion 1 weist ein Beschlagelement 6a auf, das einerseits an einer Sitzoberschiene 5 eines Sitzschienenpaares 3 und andererseits an einer Achse 12 einer Sitzstruktur 7 gelenkig festgelegt ist. Dabei umfasst das Beschlagelement 6a auf einer Seite, die einer Sitzunterschiene 4 des Sitzschienenpaares 3 zugewandt ist, ein Feststellelement 8a in Form eines rechteckigen, von der Oberfläche des Beschlagelements 6a vorstehenden Steges.

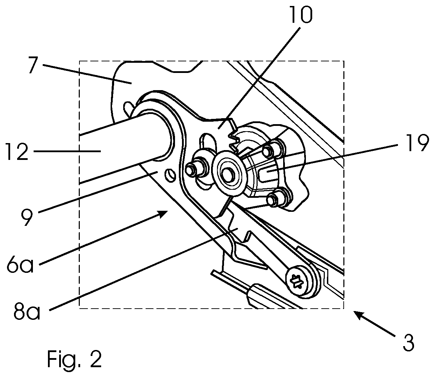

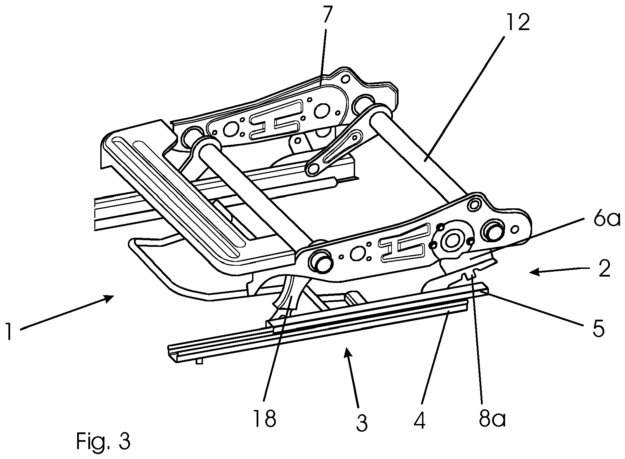

Das Beschlagelement 6a ist aus zwei miteinander stoffschlüssig verbundenen Bauelementen, einem Beschlagteil 9 und einem Zahnradsegment 10, gebildet (Fig. 3), wobei das Zahnradelement 10 mit einer fest an der Sitzstruktur 7 angeordneten Baueinheit 19 zum Antrieb des Beschlagelements 6a bzw. zu dessen Dämpfung zusammenwirkt (Fig. 2).

Die gesamte Fahrzeugsitzunterkonstruktion 1 weist, wie in Fig.3 dargestellt, zwei parallel zueinander auf jeder der beiden Seiten der Sitzstruktur 7 angeordnete Sitzschienenpaare 3 auf, die jeweils eine fest an einer Fahrzeugstruktur angeordnete Sitzunterschiene 4 und eine darauf verschieblich angeordnete Sitzoberschiene 5 umfassen. Die Sitzstruktur 7 ist mittels insgesamt vier Beschlägen 6a, 18 oberhalb der beiden Sitzschienenpaare 3 angeordnet, wobei die beiden auf der Rückseite des Fahrzeugssitzes gelegenen Beschlagelement 6a sowohl an der Sitzoberschiene 5 als auch an der Fahrzeugstruktur 7 gelenkig angeordnet sind, während die vorderen Beschläge 18 mit der Sitzoberschiene 5 fest verbunden sind und nur gegenüber der Sitzstruktur 7 verschwenkt werden können.

Das zweistückig gebildete Beschlagelement 6a umfasst ein Beschlagteil 9, das einstückig aus Blech durch Stanzen sowie zweifaches Umbiegen gebildet ist. Darauf ist ein Teil der Oberfläche des Beschlagteils 9 überdeckend ein Zahnradsegment 10 angeordnet, das wenigstens im Bereich seiner Verzahnung 20 über die Oberfläche des Beschlagteils 9 hinaus steht.

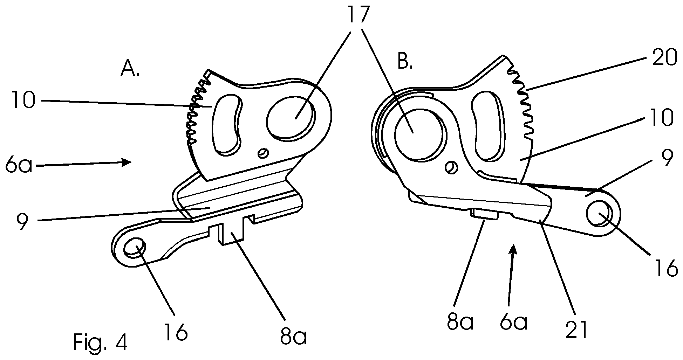

Der Beschlagteil 9 weist dabei eine Ausnehmung 16 zur Aufnahme eines Befestigungsmittels an der Sitzoberschiene 5 sowie eine Achsaufnahmeöffnung 17 zur Anordnung an einer fest mit der Sitzstruktur 7 verbundenen Achse 12 auf, wobei das Zahnradsegment 10 derart auf dem Beschlagteil 9 angeordnet und befestigt ist, dass eine ebenfalls daran angeformte, mit der Achsaufnahmeöffnung 17 des Beschlagteils 9 identische Öffnung deckungsgleich über dieser zu liegen kommt (Fig. 4).

Das Zahnradsegment 10 ist aus einem deutlich festeren Material, beispielsweise einem Stahl, als der Beschlagteil 9 gebildet, der aus Blech bestehen kann.

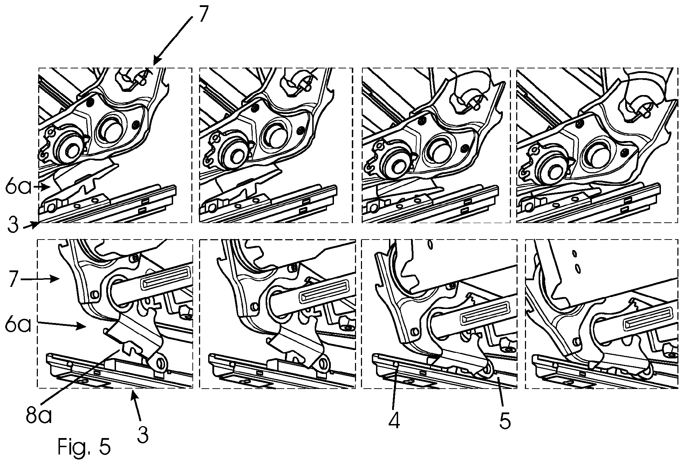

Eine Verschwenkung des Beschlagelements 6a bei einem Verkehrsunfall ist im zeitlichen Verlauf in den Abbildungen der Figur 5 dargestellt. Dabei sind in der regulären Gebrauchsposition des Beschlagelements 6a das daran angeordnete Feststellelement 8a und das Sitzschienenpaar 3 voneinander beanstandet. Durch die bei einem Verkehrsunfall auftretenden Kräfte wird nun ein der Fahrzeugrückseite zugewandter Teil der Sitzstruktur 7 durch Verschwenkung des Beschlagelements 6a derart abgesenkt, dass das Feststellelement 8a in einen Spalt zwischen Sitzunterschiene 4 und Sitzoberschiene 5 eindringt, wobei es beide Sitzschienen 4, 5 irreversibel deformiert und dadurch die Sitzoberschiene 5 in Bezug zur Sitzunterschiene 4 festlegt.

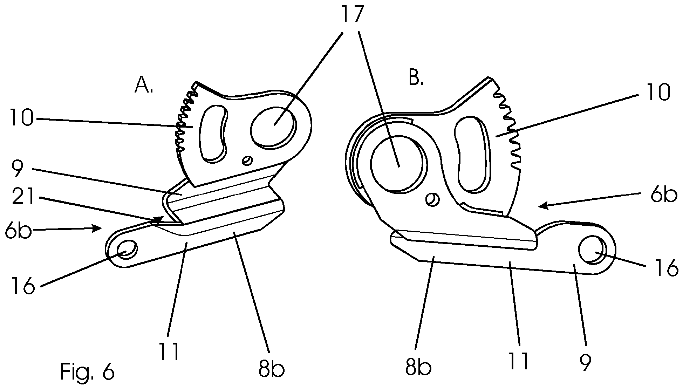

Ein Beschlagelement 6b einer zweiten Ausführungsform einer Fahrzeugsitzunterkonstruktion 1 unterscheidet sich von dem Beschlagelement 6a der ersten Ausführungsform einer Fahrzeugsitzunterkonstruktion 1 dadurch, dass der Beschlagteil 9 nicht wenigstens zweifach in die gleiche Raumrichtung abgewinkelt verläuft (Fig. 4), sondern zunächst etwa rechtwinklig in eine Richtung abgebogen ist und dann ebenfalls etwa rechtwinklig gekrümmt in die entgegengesetzte Richtung verläuft (Fig. 6), wodurch die an die Ausnehmung 16 zur Anordnung an der Sitzoberschiene 5 angrenzende Unterkante des Beschlagelements 6b bereits als Feststellelement 8b genutzt werden kann, ohne dass diese weiter speziell umgeformt werden müsste.

Das Beschlagelement 6a, 6b sowohl der ersten Ausführungsform (Fig. 4) als auch der zweiten Ausführungsform (Fig. 6) weisen dabei aufgrund der jeweils zweifachen Abwinklung einen ebenen Oberflächenabschnitt auf, der bei einem an der Sitzoberschiene 5 montierten Beschlagelement 6a, 6b vollständig mit der Oberfläche der Sitzoberschiene 5 in Kontakt gebracht werden kann, und so bei einem Verkehrsunfall als Anschlagfläche 21 dient (Fig. 5).

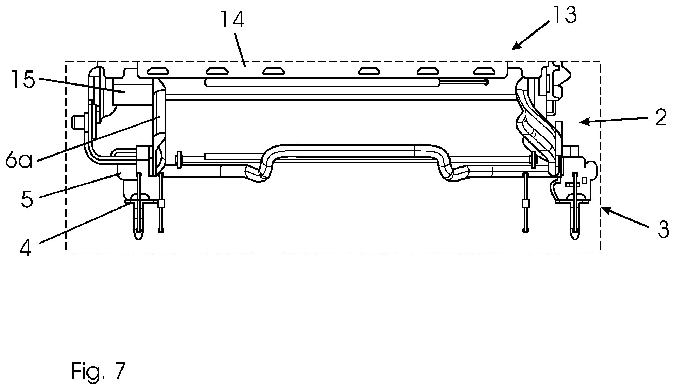

Die an dem Beschlagelements 6a, 6b angeformte Anschlagfläche 21 sowie die Möglichkeit, das Beschlagelement 6a, 6b verschwenkbar an einer an der Sitzstruktur 7 befestigten Achse 12 anzuordnen, ermöglichen es, eines oder beide der Sitzschienenpaare 3 vollständig unterhalb der Sitzfläche 14 des Fahrzeugssitzes 13 anzuordnen (Fig. 7), wodurch eine besonders platzsparende Bauweise der Fahrzeugsitzunterkonstruktion 1 möglich wird und auch einer asymmetrischen Anordnung der beiden Sitzschienenpaare 3 in Bezug zum Sitzrahmen 15 nichts entgegensteht.

### Bezugszeichenliste

- 1: Fahrzeugsitzunterkonstruktion
- 2: Verstellvorrichtung
- 3: Sitzschienenpaar
- 4: Sitzunterschiene
- 5: Sitzoberschiene
- 6a: Beschlagelement
- 6b: Beschlagelement
- 7: Sitzstruktur
- 8a: Feststellelement
- 8b: Feststellelement
- 9: Beschlagteil
- 10: Zahnradsegment
- 11: abgewinkter Teil
- 12: Achse
- 13: Fahrzeugsitz
- 14: Sitzfläche
- 15: Sitzrahmen
- 16: Ausnehmung
- 17: Achsaufnahmeöffnung
- 18: vorderer Beschlag
- 19: Baueinheit
- 20: Verzahnung
- 21: Anschlagfläche

## Patentansprüche

1. Fahrzeugsitzunterkonstruktion (1) mit einer unfallinduzierten Verstellvorrichtung (2), umfassend
- ein Sitzschienenpaar (3), aufweisend eine verschiebbar gegenüber einer Sitzunterschiene (4) angeordneten Sitzoberschiene (5), und
- eine über ein Beschlagelement (6a, 6b) verschwenkbar an der Sitzoberschiene (5) angeordnete Sitzstruktur (7),
**dadurch gekennzeichnet, dass**
- das Beschlagelement (6a, 6b) derart ausgebildet und an der Sitzoberschiene (5) sowie an der Sitzstruktur (7) angeordnet ist, dass bei einem Unfall ein an dem Beschlagelement (6a, 6b) angeordnetes Feststellelement (8a, 8b) in eine die Sitzoberschiene (5) an der Sitzunterschiene (4) arretierende Verriegelungsposition gelangt.

2. Fahrzeugsitzunterkonstruktion nach Anspruch 1, **dadurch gekennzeichnet, dass** das Feststellelement (8a, 8b) derart ausgebildet ist, dass es in der Verriegelungsposition die Sitzoberschiene (5) kraftschlüssig an der Sitzunterschiene (4) festlegt.

3. Fahrzeugsitzunterkonstruktion nach Anspruch 1 oder 2, **dadurch gekennzeichnet, dass** das Feststellelement (8a, 8b) in der Verriegelungsposition klemmend zwischen der Sitzoberschiene (5) und der Sitzunterschiene (4) angeordnet ist.

4. Fahrzeugsitzunterkonstruktion nach einem oder mehreren der vorhergehenden Ansprüche, **dadurch gekennzeichnet, dass** das Feststellelement (8a, 8b) in der Verriegelungsposition wenigstens einen Teil der Sitzunterschiene (4), bevorzugt zugleich auch einen Teil der Sitzoberschiene (5) deformiert.

5. Fahrzeugsitzunterkonstruktion nach einem oder mehreren der vorhergehenden Ansprüche, **dadurch gekennzeichnet, dass** das Beschlagelement (6a, 6b) zweiteilig gebildet ist, wobei das Beschlagelement (6a, 6b) bevorzugt wenigstens einen Beschlagteil (9) sowie ein Zahnradsegment (10) umfasst.

6. Fahrzeugsitzunterkonstruktion nach einem oder mehreren der vorhergehenden Ansprüche, **dadurch gekennzeichnet, dass** das Feststellelement (8a, 8b) einstückig mit dem Beschlagelement (6a, 6b), bevorzugt einstückig mit dem Beschlagteil (9) des Beschlagelements (6a, 6b) gebildet ist.

7. Fahrzeugsitzunterkonstruktion nach einem oder mehreren der vorhergehenden Ansprüche, **dadurch gekennzeichnet, dass** das Zahnradsegment (10) fest am Beschlagteil (9) angeordnet ist und mit einer weiteren Baueinheit (21) des Fahrzeugssitzes (13) derart zusammenwirkt, dass eine Höhen- oder Neigungseinstellung des Fahrzeugssitzes (13) gegenüber der Sitzunterschiene (4) mittels des Beschlagelements (6a, 6b) möglich ist.

8. Fahrzeugsitzunterkonstruktion nach einem oder mehreren der vorhergehenden Ansprüche, **dadurch gekennzeichnet, dass** das Beschlagelement (6a, 6b), insbesondere der Beschlagteil (9) des Beschlagelements (6a, 6b), als wenigstens zweifach abgewinkeltes Bauelement gebildet ist, wobei einer der abgewinkelten Teile (11) des Beschlagelements (6a, 6b) das Feststellelement (8a, 8b) bildet.

9. Fahrzeugsitzunterkonstruktion nach einem oder mehreren der vorhergehenden Ansprüche, **dadurch gekennzeichnet, dass** das Beschlagelement (6a, 6b) gegenüber der Sitzoberschiene (5) und gegenüber der Sitzstruktur (7) jeweils verschwenkbar angeordnet ist, wobei das Beschlagelement (6a, 6b) bevorzugt über eine Achse (12) mit der Sitzstruktur (7) verbunden ist.

10. Fahrzeugsitz (13), insbesondere Kraftfahrzeugsitz, mit einer Fahrzeugsitzunterkonstruktion (1) mit einer unfallinduzierten Verstellvorrichtung (2) nach einem oder mehreren der vorhergehenden Ansprüche.

11. Fahrzeugsitz nach Anspruch 10, **dadurch gekennzeichnet, dass** wenigstens ein Sitzschienenpaar (3) vollständig unterhalb einer Sitzfläche (14) des Fahrzeugssitzes (13) derart angeordnet ist, dass sich die Sitzstruktur (7), insbesondere ein Sitzrahmen (15) der Sitzfläche (14), bezogen auf die Einbaulage des Fahrzeugssitzes (13) in einem Kraftfahrzeug auch mit dem Feststellelement (8a, 8b) in der Verriegelungsposition vollständig oberhalb des Sitzschienenpaares (3) befindet.

## Claims

1. A vehicle seat substructure (1) having an accident-induced adjustment device (2), comprising
- a pair of seat rails (3) having an upper seat rail (5) arranged in a displaceable manner with respect to a lower seat rail (4), and
- a seat structure (7) that is arranged on the upper seat rail (5) in a pivotable manner via a fitting element (6a, 6b),
**characterized in that**
- the fitting element (6a, 6b) is configured and arranged on the upper seat rail (5) and on the seat structure (7) such that, in the event of an accident, a fixing element (8a, 8b) arranged on the fitting element (6a, 6b) passes into a locking position locking the upper seat rail (5) to the lower seat rail (4).

2. The vehicle seat substructure as claimed in claim 1, **characterized in that** the fixing element (8a, 8b) is configured such that, in the locking position, it secures the upper seat rail (5) to the lower seat rail (4) in a force-fitting manner.

3. The vehicle seat substructure as claimed in claim 1 or 2, **characterized in that**, in the locking position, the fixing element (8a, 8b) is arranged in a clamping manner between the upper seat rail (5) and the lower seat rail (4).

4. The vehicle seat substructure as claimed in one or more of the preceding claims, **characterized in that**, in the locking position, the fixing element (8a, 8b) deforms at least a part of the lower seat rail (4), preferably at the same time also a part of the upper seat rail (5).

5. The vehicle seat substructure as claimed in one or more of the preceding claims, **characterized in that** the fitting element (6a, 6b) is formed in two parts, wherein the fitting element (6a, 6b) preferably comprises at least one fitting part (9) and a toothed wheel segment (10).

6. The vehicle seat substructure as claimed in one or more of the preceding claims, **characterized in that** the fixing element (8a, 8b) is formed integrally with the fitting element (6a, 6b), preferably integrally with the fitting part (9) of the fitting element (6a, 6b).

7. The vehicle seat substructure as claimed in one or more of the preceding claims, **characterized in that** the toothed wheel segment (10) is arranged fixedly on the fitting part (9) and interacts with a further structural unit (21) of the vehicle seat (13) such that it is possible to adjust the height or inclination of the vehicle seat (13) with respect to the lower seat rail (4) by means of the fitting element (6a, 6b).

8. The vehicle seat substructure as claimed in one or more of the preceding claims, **characterized in that** the fitting element (6a, 6b), in particular the fitting part (9) of the fitting element (6a, 6b), is formed as a structural element which is angled at least twice, wherein one of the angled parts (11) of the fitting element (6a, 6b) forms the fixing element (8a, 8b).

9. The vehicle seat substructure as claimed in one or more of the preceding claims, **characterized in that** the fitting element (6a, 6b) is arranged so as to be pivotable in each case with respect to the upper seat rail (5) and with respect to the seat structure (7), wherein the fitting element (6a, 6b) is preferably connected to the seat structure (7) via an axle (12).

10. A vehicle seat (13), in particular a motor vehicle seat, having a vehicle seat substructure (1) having an accident-induced adjustment device (2) as claimed in one or more of the preceding claims.

11. The vehicle seat as claimed in claim 10, **characterized in that** at least one pair of seat rails (3) is arranged entirely beneath a seat surface (14) of the vehicle seat (13) such that the seat structure (7), in particular a seat frame (15) of the seat surface (14), is located entirely above the pair of seat rails (3) with respect to the installation position of the vehicle seat (13) in a motor vehicle, even with the fixing element (8a, 8b) in the locking position.

## Revendications

1. Sous-structure de siège de véhicule (1) comprenant un dispositif de réglage (2) induit par un accident, comprenant
- une paire de rails de siège (3) présentant un rail supérieur de siège (5) disposé de manière à pouvoir coulisser par rapport à un rail inférieur de siège (4), et
- une structure de siège (7) disposée sur le rail supérieur de siège (5) de manière à pouvoir pivoter par le biais d'un élément de ferrure (6a, 6b),
**caractérisée en ce que**
- l'élément de ferrure (6a, 6b) est réalisé et disposé sur le rail supérieur de siège (5) ainsi que sur la structure de siège (7) de telle sorte que dans le cas d'un accident, un élément de fixation (8a, 8b) disposé sur l'élément de ferrure (6a, 6b) parvienne dans une position de verrouillage bloquant le rail supérieur de siège (5) sur le rail inférieur de siège (4).

2. Sous-structure de siège de véhicule selon la revendication 1, **caractérisée en ce que** l'élément de fixation (8a, 8b) est réalisé de manière à fixer le rail supérieur de siège (5) par engagement par force sur le rail inférieur de siège (4) dans la position de verrouillage.

3. Sous-structure de siège de véhicule selon la revendication 1 ou 2, **caractérisée en ce que** l'élément de fixation (8a, 8b) est disposé dans la position de verrouillage en produisant un serrage entre le rail supérieur de siège (5) et le rail inférieur de siège (4).

4. Sous-structure de siège de véhicule selon l'une quelconque ou plusieurs des revendications précédentes, **caractérisée en ce que** l'élément de fixation (8a, 8b), dans la position de verrouillage, déforme au moins une partie du rail inférieur de siège (4), de préférence en même temps également une partie du rail supérieur de siège (5).

5. Sous-structure de siège de véhicule selon l'une quelconque ou plusieurs des revendications précédentes, **caractérisée en ce que** l'élément de ferrure (6a, 6b) est réalisé en deux parties, l'élément de ferrure (6a, 6b) comprenant au moins de préférence une partie de ferrure (9) ainsi qu'un segment de roue dentée (10).

6. Sous-structure de siège de véhicule selon l'une quelconque ou plusieurs des revendications précédentes, **caractérisée en ce que** l'élément de fixation (8a, 8b) est réalisé d'une seule pièce avec l'élément de ferrure (6a, 6b), de préférence d'une seule pièce avec la partie de ferrure (9) de l'élément de ferrure (6a, 6b).

7. Sous-structure de siège de véhicule selon l'une quelconque ou plusieurs des revendications précédentes, **caractérisée en ce que** le segment de roue dentée (10) est disposé fixement sur la partie de ferrure (9) et coopère avec une unité structurelle supplémentaire (21) du siège de véhicule (13) de telle sorte qu'un ajustement en hauteur ou en inclinaison du siège de véhicule (13) par rapport au rail inférieur de siège (4) puisse être effectué au moyen de l'élément de ferrure (6a, 6b).

8. Sous-structure de siège de véhicule selon l'une quelconque ou plusieurs des revendications précédentes, **caractérisée en ce que** l'élément de ferrure (6a, 6b), en particulier la partie de ferrure (9) de l'élément de ferrure (6a, 6b), est réalisé sous forme d'élément structurel coudé au moins deux fois, l'une des parties coudées (11) de l'élément de ferrure (6a, 6b) constituant l'élément de fixation (8a, 8b).

9. Sous-structure de siège de véhicule selon l'une quelconque ou plusieurs des revendications précédentes, **caractérisée en ce que** l'élément de ferrure (6a, 6b) est disposé à chaque fois de manière à pouvoir pivoter par rapport au rail supérieur de siège (5) et par rapport à la structure de siège (7), l'élément de ferrure (6a, 6b) étant de préférence raccordé à la structure de siège (7) par le biais d'un axe (12).

10. Siège de véhicule (13), en particulier siège de véhicule automobile, comprenant une sous-structure de siège (1) comprenant un dispositif de réglage (2) induit par un accident (2) selon l'une quelconque ou plusieurs des revendications précédentes.

11. Siège de véhicule selon la revendication 10, **caractérisé en ce qu'**au moins une paire de rails de siège (3) est disposée complètement en dessous d'une surface de siège (14) du siège de véhicule (13), de telle sorte que la structure de siège (7), en particulier un cadre de siège (15) de la surface de siège (14), se trouve, par rapport à la position d'installation du siège de véhicule (13) dans un véhicule automobile, également complètement au-dessus de la paire de rails de siège (3), avec l'élément de fixation (8a, 8b) dans la position de verrouillage.
